# EUROPEAN PATENT SPECIFICATION

(11) **EP 1 571 544 B1**
(45) Date of publication and mention of the grant of the patent: **16.11.2011**
(21) Application number: 05100886.0
(22) Date of filing: 09.02.2005
(51) Int. Cl.: G06F 3/12

(54) **Coordinated concurrent printing of print jobs containing pages that are incompatible with a single printer**
Koordiniertes, gleichzeitiges Drucken von Druckaufgaben, die Seiten enthalten, die mit einem einzelnen Drucker unvereinbar sind.
Impression coordonée et simultanée des tâches d'impressions contenant des pages incompatibles avec une seule imprimante

(30) Priority: 19.02.2004 EP 04075536
(43) Date of publication of application: 07.09.2005
(73) Proprietor: Océ-Technologies B.V., 5914 CC Venlo (NL)
(72) Inventor: Van den Tillaart, Robertus C.W.T.M., 5422 BJ, Gemert (NL); Roosen, Monica M.W.M., 5258 JV, Berlicum (NL); Rozing, Gerardus J., 5961 JP, Horst (NL); Leppink, Arie, 5924 EH, Venlo (NL)
(74) Representative: van Meeteren, Arend Anthonie

(56) References cited:
- EP-A- 1 215 879
- EP-A2- 1 229 728
- US-A- 5 140 674
- US-A1- 2002 051 176
- MORGAN P F: "INTEGRATION OF BLACK ONLY AND COLOR PRINTERS" XEROX DISCLOSURE JOURNAL, XEROX CORPORATION. STAMFORD, CONN, US, vol. 16, no. 6, 1 November 1991 (1991-11-01), pages 381-383, XP000235469

## Description

The invention generally relates to distributed printing, wherein printers with different capabilities can be effectively combined to print documents including pages having different device-specific properties, such that some of the pages must be printed on a printer of a first type and other pages must be printed on a printer of a second, different, type.

An example of such device-specific properties is the existence of colour in some of the document pages, while other pages contain only black-and-white image elements. Such print jobs cannot be completely printed on a black-and-white-only printer without losing image information. A colour printer would be able to print the complete print job, but colour printers are generally slower and more expensive to use. An possible solution would be to split the print file into a colour-containing part and a black-and-white-only part, and print each part on an appropriate printer. This is cost-effective and may increase processing speed, but it requires that the user himself split the print file in two parts, and after printing merges the prints into one print set, which takes great precision and is error-prone.

The problem is partly solved by a method known from US 5,978,557, wherein a system is disclosed that checks every page of a print job for the presence or absence of colour, and automatically sends pages containing colour to a colour printer and pages not containing colour to a monochromatic (i.e. black-and-white) printer. Flag sheets are inserted in the monochrome print set to indicate the places where colour prints are to be inserted.

Although saving a user the effort of splitting a print file into parts, this known method takes over control of the process from the user, who cannot choose the printers used for the job any more, and, moreover, still leaves him with extra work for merging the prints from the different printers later.

D4 discloses a system including a large black and white (b/w) printer having a RIP section, and at least one color printer. The print process is completely managed by the b/w printer: it receives the job, divides it into color and b/w pages, rasterizes those pages, sends the color page file to a color printer and finally prints the b/w pages. An operator starts the print process, brings the color prints to the b/w printer and inserts them in an input tray thereof, and starts the final print stage, in which the b/w pages are printed and the color pages are automatically inserted.

Further, US 5,140,674 discloses a desktop printing system including a PC and a modular combination of a color printer and a monochrome text printer, physically connected so that pages printed in the color printer are transported into the monochrome text printer. In operation, printing information is segregated into color and text components, and the color printer is controlled to print only color components while the text printer is controlled to print only monochrome text components.

Although this concept may be handy for relatively simple print jobs of mixed type, it requires physically connecting two printer devices and solving possible timing problems when sheets are transported from one device to the other (e.g., a black-and-white laser printer is normally faster than an inkjet colour printer). Moreover, In the D1 concept, the processing of the different parts of a job is basically simultaneous, as it is a single control process.

It is an object of the present invention to solve the problem of printing mixed print jobs, i.e. print jobs that contain pages that can only be printed on different dedicated printer devices, while leaving the user full control over the processing, in particular, the selection of printers and the choice of an appropriate moment for the processing.

This object is attained in a method according to the preamble, which is characterized by
- simultaneously making the job locally available for interactive printing on the at least one printer of said first type (1 C) as well as on the at least one printer of said second type (1A, 1 B), wherein
   "interactive printing" means that processing of a print job in a printer can only be started from that printer's local user interface (160) by selecting that job from a list of available print jobs and giving a print command for the purpose,
   any starting of a print job being irrespective of any processings in other printers, and leaving said print job available for interactive printing on any of the other printers,
   - starting interactive printing of a respective print job on an arbitrary one of said printers, irrespective of the type of that printer, through job selection and a print command on the local user interface of that printer, and, during the print processing of said print job,
   - automatically selecting those pages of the job, that are designated for that type of printer, and printing those selected pages only.

Thus, according to the invention, a user may simply walk up to the dedicated printer he chooses and select and start his print job, and the printer will only print the pages that were designated for that printer (type). Then, the user may walk to a printer of the other type, select his same job, and the printer will only print the pages designated for that printer (type). Merging may be done automatically, when the user loads the prints he has made at the first printer into the second printer as insert sheets. This leaves the user in full control of the print process. For instance, the user does not have to search for the prints made at the two devices among the print jobs printed there, because he is present at the moment the job is being processed.

It is noted that EP-A-1 215 879 discloses a printing system including plural connected printers, wherein print jobs are distributed to the connected printers but not printed unless they are selected and started locally on the user interface of one of those. This known system does, however, not include automatic splitting of print jobs into pages with different characteristics and selective printing of those pages.

Other examples of print jobs needing processing on different devices are jobs using different paper sizes, e.g. A4 and A3, when a fast printer can only print on A4 size paper and a printer being able to print on A3 is much slower. Further, print jobs may include pages encoded in different PDL, such as PostScript and PCL, requiring different printers for processing.

The invention also relates to a printing system in which the method according to the invention is implemented.

Other embodiments and advantages of the invention will be explained hereinafter by reference to the appended drawings, in which like reference numbers designate corresponding elements. In the drawings,
Fig. 1 shows a general outline of a network system including a plurality of workstations and printers and a Print Server according to the invention;
Fig. 2 is schematic drawing of the Unchained Printing process as used in the present invention;
Fig. 3 is a diagram showing an exemplary printing device;
Fig. 4 is a diagram showing aspects of an Unchained-Printing Server;
Fig. 5 and 6 show an operator control panel of a printer with a display image in various situations;
Fig. 7 and 8 show flow charts of the process according to the present invention;
Fig. 9 and 10 show further operator control panel display images in various situations.

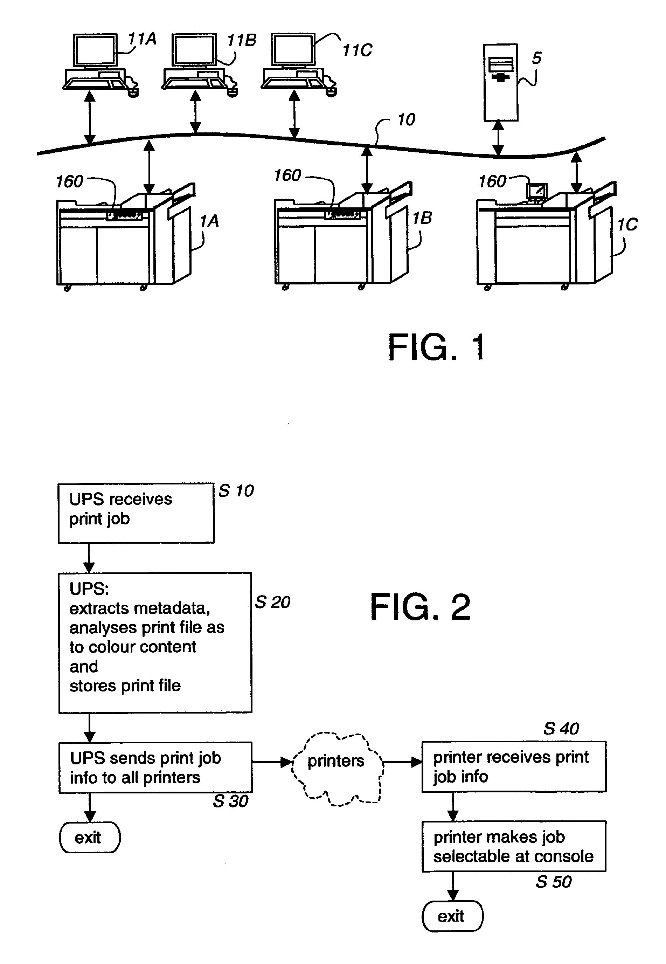

Fig. 1 shows a general outline of a network system including a plurality of workstations 11A, 11B, 11C, a plurality of printers 1A, 1B (both being black-and-white-only printers) and 1C (a colour printer), and an Print Server 5, all connected to a network 10.

The printers are each equipped with an operator control panel 160 for operation, that is provided with a display and keys and is connected to an operator control unit of the printer. The printers may be embodied as digital copiers, as is the case in this example, but also printers proper provided with a suitable operator control unit and a control panel.

In the following description, the terms "print file" and "print job" are used indifferently. They are meant to relate to the same entity, although stressing different aspects of it, namely the data file aspect and the administrational aspect, respectively.

Within the context of the present invention, digital data files which are sent to any of the devices 1A, 1B, 1C via the network 10 for printing, are either of a first type or of a second type. Files of the first type are required to be printed directly, i.e. without further action on the part of an operator at the apparatus, while files of the second type are required only to be stored in the memory of the apparatus and not to be printed until an operator explicitly so requests at the apparatus by selecting one via the operator control panel. The type of file involved is machine-recognizable from an attribute added to the file.

Processing of a data file of the first type is referred to as automatic printing (AP). Processing of a data file of the second type is referred to as "interactive printing" (IP).

While AP print jobs are submitted to a particular printer and are in principle handled by that printer, IP print jobs are automatically shared by all printers or a predefined group thereof, and are made available for selection and processing at any of these devices such that a user may freely choose one of the printers for printing his print jobs. This will hereinafter be called "unchained-printing". The concepts of interactive printing and unchained printing are described extensively in applicant's European patent application no. EP 1 229 724.

Generally, the concept of "unchained printing" includes a server function (called "UPS", or Unchained-Printing Server, hereinafter) and an associated print data storage function, which may be implemented in one of several ways and in different physical locations in the system, to be described below.

The general process as contemplated in the present invention will now be described with reference to Fig. 2, 7 and 8. It is noted that the process is in principle a variant of interactive printing (IP).

In a first stage of the process, as shown in Fig. 2, an interactive print file is submitted by a workstation and is received by the server function UPS (S10). The server function stores the print data in an associated storage and extracts "metadata" from the file. Metadata include information contained in the file, but not the actual print image data. Examples of metadata are identification data of the file, such as the name of the user/owner and the name of the file, the time of arrival of the print file at the server, print process settings and colour content of the respective pages of the document represented by the print file (S20). The colour content of the pages is determined by the UPS by "preflighting" the print file, an operation in which the print file is analysed, but not completely RIPped. The colour content analysis may designate a page as "coloured", when that page contains at least one coloured pixel or element, but preferably, it will include a mechanism for weighing the importance of the coloured element and discard non-functional colours. A technique of assessing the functional value of colour in a document is for instance disclosed in Applicant's copending European Patent Application No. EP-A 1 367 814. Other techniques simply count colour pixels and only if their number exceeds a predetermined threshold value, designate the image as "coloured". Of course, thresholds may be different for different colours.

The server function UPS sends the metadata of a newly arrived print job to all connected printers (S30).

The printers receive the metadata (S40) and include the new job in their administration systems to make them selectable for printing (S50), even though they do not have the actual print image data stored locally. This is a preparing step in the print process according to the present invention.

Before explaining the further procedure according to the invention, first the internal structure of the printers and the UPS 5 will now be described.

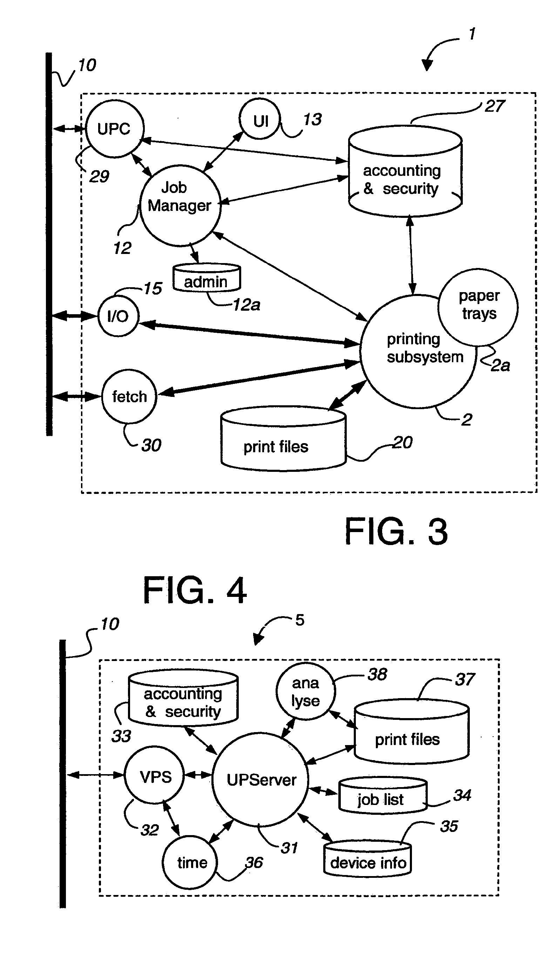

Fig. 3 is a diagram showing the constituent parts of an exemplary printing device for use with the present invention. The description applies to both colour and black-and-white-only printers.

The device 1 (which corresponds to any of the devices 1A, 1B or 1C in Fig. 1) comprises a printing subsystem 2 which contains a printer engine, a memory, a finishing subsystem for, e.g., stapling, and a dedicated control unit, not shown because this part of the device is conventional and does not embody the present invention. The printer engine is equipped with several storage trays 2a for paper stock.

Further, the device 1 also includes a number of units required to print digital image data which are fed via the local network 10, such as:
- a management unit 12, hereinafter referred to as the: JobManager, which manages the processing and also maintains an administration system for all copying, scanning and print jobs present,
- an administration system (data base) 12a for jobs, maintained by the JobManager 12,
- an operator control unit 13, also termed: UserInterface (UI), provided with an operator control panel (not shown) on the apparatus housing, with a display and keys for operation of the device 1,
- an Input/Output Handler 15 for receiving and transmitting digital data via the network 10 from the digital environment,
- a storage unit 20 for print files,
- an accounting and security unit 27, which inter alia manages the authorization of users and access codes,
- an Unchained-Printing Client (UPC) 29 connected between the JobManager 12 and the network 10 for communicating with the Unchained-Printing Server (UPS),
- a fetch module 30 for fetching a print data file from the print data storage function associated to the UPS, via the network 10.

Fig. 4 is a diagram showing aspects of the Unchained-Printing Server (UPS) 5. The UPS may be implemented as a PC having a high-capacity hard disc. It includes the UPS module proper 31, which controls all processes, and a Virtual Printer Server 32. The UPS module 31 maintains four databases, one (37) including the print files submitted by users, one (33) including accounting and security information, a.o. permissions of users, one (34) including the list of the metadata of all jobs in the system and one (35) including information on the printers connected. The UPS 5 also has an analysis module 38 for analysing colour content of the print files stored in the database 37 as described above and designating individual pages of the print files for colour processing or black-and-white processing. Further, the UPS 5 includes a time server 36 for synchronizing the workstations, the printers and the UPS, e.g. by using the well-known SNTP protocol.

The Virtual Printer Server (VPS) 32 manages the communication between the printers and the UPS module 31. It exchanges messages with the printers when an event occurs at a printer, such as receiving, starting, finishing a print job, malfunctions, etc. Further, the VPS 32 senses when:
- a printer goes down
- a printer comes up.

The accounting and security database 33 of the UPS 5 and those of the printers (27) are synchronized in order to assure that they contain the same information. Any changes in permissions and credits are entered by the system administrator in the database of the UPS and are then automatically distributed by the UPS to the corresponding databases in the printers. Also, when a print file of an as yet unknown user arrives at a printer, and the JobManager 12 of that printer extracts the user name and updates its accounting and security database 27, the said JobManager also informs the UPS, which updates its database 33 accordingly and informs the other printers.

Although the UPS 5 has been described here as a hardware platform running both the server and storage function, other embodiments are contemplated by the inventors.

For instance, the storage function may be implemented in the printers in a distributed way. Print jobs may in that case be submitted to one of the printers, that store the print file, analyse it and send all information to the UPS that only performs the server function. Finally, the complete UPS process, including storage of jobs, may be implemented as a distributed process running in the controllers of the printers, and no specific hardware is required.

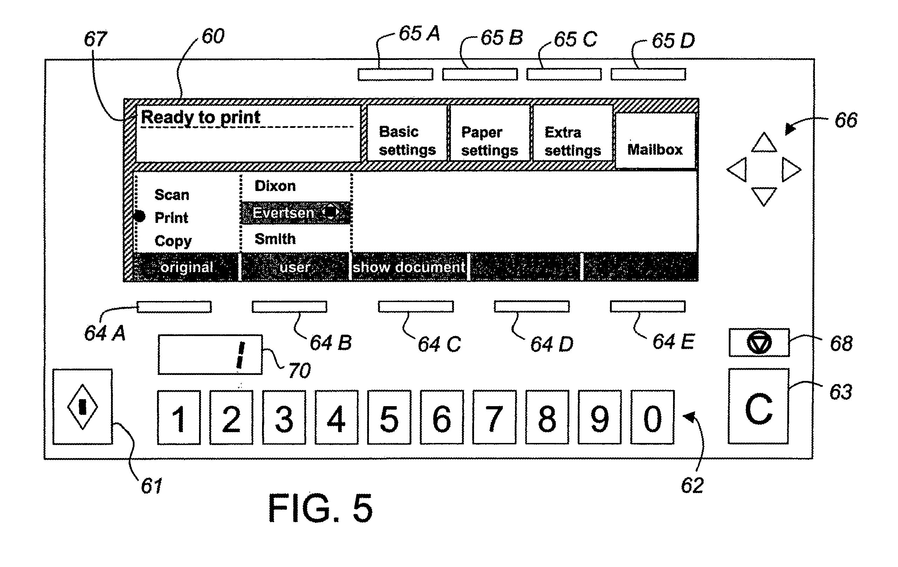

Fig. 5 shows an exemplary operator control panel 160 belonging to the operator control unit 13 of a printer. It includes a display screen 60, such as an LCD display, and a plurality of keys, namely a start key 61, number keys 62, a correction key 63, a stop key 68, selection keys 64A-E, 65A-D and the key cluster 66A-D. All these elements are connected to the operator control unit 13, which in response to operation of the keys passes signals to the JobManager 12 and which also controls the display screen 60 to display options and messages to the operator.

The selection keys 64A-E are for selecting device functions, which are grouped in sets that can themselves be selected by the keys 65A-D. Captions below the keys 65A-D specify the sets, namely, "Basic settings" such as simplex or duplex, staple, enlargement, "Paper settings" for selecting print sheet properties, and "Extra settings" such as lighter/darker, margin shift, etc. For each function group, a list of alternative settings for a function is shown for selection in a column above each key 64A-E. By actuating a selection key an operator can choose a different setting, e.g. in accordance with a cyclic pattern. The leftmost column is dedicated to the basic device function: "Copy", "Print", or "Scan".

The operator control panel 19 also contains a number display 70 to indicate the number of copies set.

The procedure for handling print files for interactive printing according to the present invention will now be described. It is assumed that a print file is to be printed that has pages containing colour and black-and-white-only pages. As described above with respect to Fig. 2, the print file is analysed as to colour content in the UPS and some of the pages are designated for colour processing, while the others are designated for black-and-white processing. Then, the metadata of the print job are sent to the printers (1A, 1B and 1C).

Upon reception of the metadata of a new print job, the JobManager 12 of each printer stores the metadata in its administration system 12a.

When an operator wants to have a specific data file printed, he must so instruct the printer via the operator control panel 160. First, he must select the function "Print" with key 64A. In reaction, the operator control unit 13 requests the JobManager 12 to pass a list of all the active user names (names of users having at least one print job of the second type in the system). As shown in Fig. 5, the operator control unit displays the user list on the display, in the column above key 64B, whereafter the user can select his name. If the list is too long to be displayed completely, a part of it is shown on the display and scrolling is possible using the star keys 66. Initially, the display focus is on the user who has last submitted a print job to the particular printer (in this example "Evertsen"), but selection may be shifted to another user name using the star keys 66.

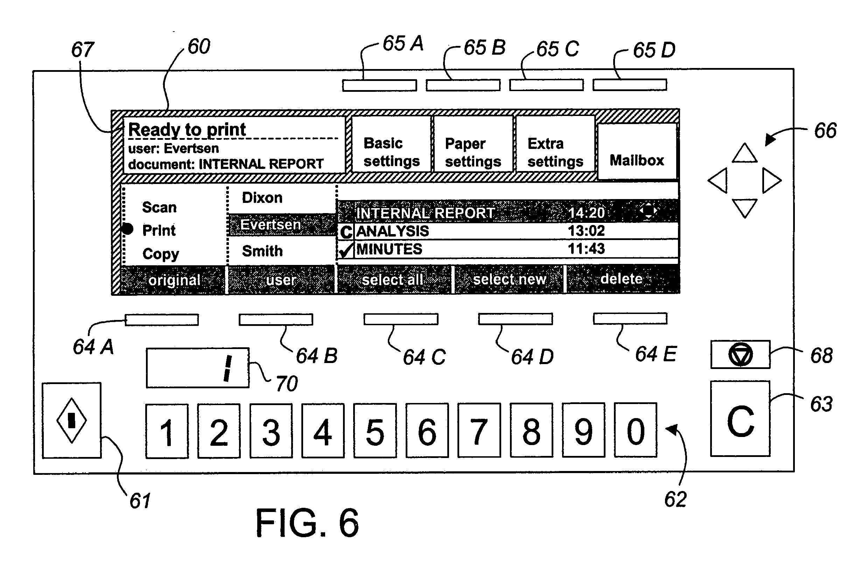

After the user has selected his name, he actuates key 64C to obtain an overview of his own print jobs. In response to this, the JobManager makes up a current list of all interactive print jobs of the current user and passes it through to the operator control unit 13, which displays this list to the user for selection on display 60. The display image is shown in Fig. 6. The submission time of each job is shown at the side of the file name. A "tick" sign is shown at the left of a file name of a file that has been printed already. Likewise, a job that has partially been printed in the context of the present invention, e.g. only the colour pages or only the black-and-white pages, is shown with an added character "c" or "b", respectively at the left. If the list is too long to be displayed completely, a part of it is shown on the display and scrolling is possible using the star keys 66. Initially, the display focus ("selection") is on the print job submitted last to the particular printer (in this example "INTERNAL REPORT"), but selection may be shifted to another job using the star keys 66. In this embodiment, the keys 64 C-E have functions for file management. Key 64C is for selecting all print jobs of the current user, key 64D is for selecting the newly-arrived print jobs only, and key 64E is for deleting any selected jobs.

After selection of a print job, the printing process is started by actuating the start key 61.

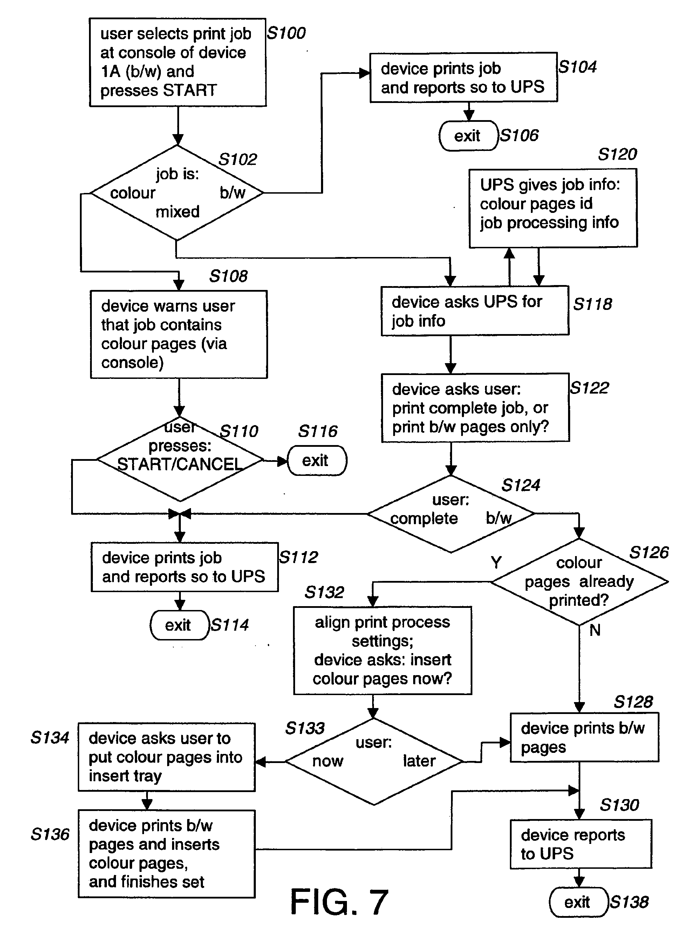

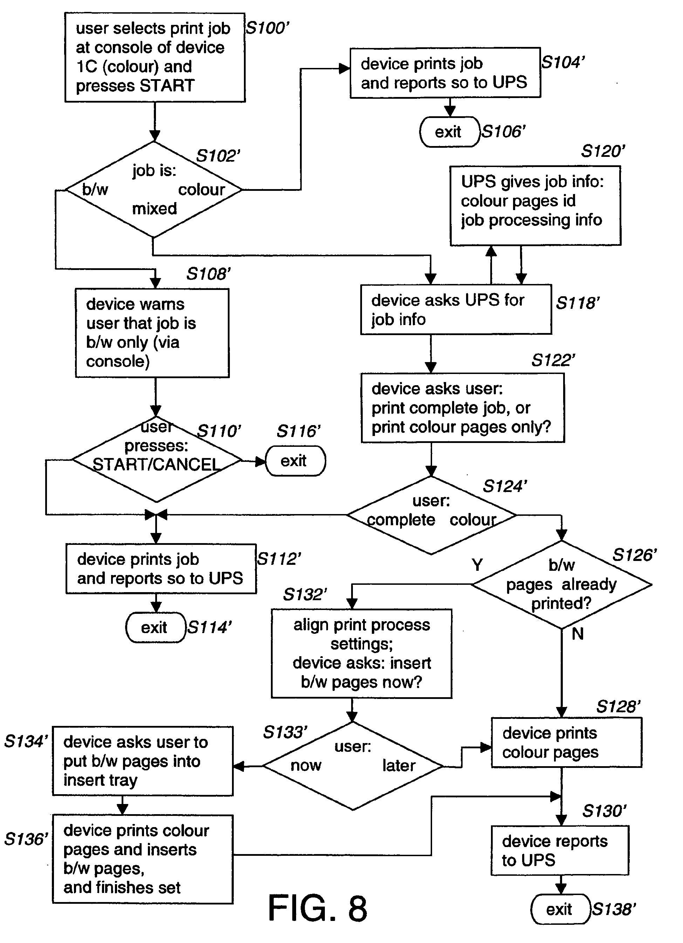

The process that follows is described with respect to either Fig. 7, if the printer is a black-and-white-only printer, or Fig. 8, if the printer is a colour printer. The flow sheets of Fig. 7 and 8 are essentially identical, and therefore, only one (Fig. 7) will be explained here extensively.

In general, when a print job is of a "mixed" kind, i.e. it contains both colour-designated pages and black-and-white-designated pages, an operator may choose to:
- print the complete job on a colour printer (which is more expensive, because colour printers normally have a higher print price; also, colour printers are often slower than black-and-white ones)
- print the complete job on a black-and-white-only printer (which may lose information), or
- print the colour pages on a colour printer and print the black-and-white pages on a black-and-white-only printer.

When the last option is chosen, the sub-sets made must be combined, which may be done off-line or, if the printer controllers are adapted therefor, on-line, by first printing the colour pages, loading them in a storage tray in the black-and-white printer, and inserting them at the correct places in the print flow (or vice-versa). In the latter option, automatic finishing, such as stapling, is still possible.

Now, going back to the process description and Fig. 7, a user selects a print job at black-and-white printer 1A (which in this case stands for any of the black-and-white printers involved) and presses the START key (S100). In response, the printer controller (JobManager 12) checks in the metadata, what kind of job it is (S102).

If the selected print job is a black-and-white-only job, the corresponding print data file is fetched from the central storage function by the fetch module 30, stored in the storage unit 20, converted to printable data ("RIPped") in the printing subsystem 2, and printed (S104), whereafter the UPS is informed so that it can update its list of job statuses 34. This finalises the process (S106).

If in check S102 the selected print job was a colour-only job, the printer shows a warning on the console display 160, that the job is all-colour and asks the operator if he really wants to have it printed on that printer (S108). The operator may respond by pressing either the START key 61 to go on printing or the CANCEL key 63 to stop the processing (possibly to go to a colour printer) (S110). When the operator chooses to go on printing, the corresponding print data file is fetched from the central storage function by the fetch module 30, stored in the storage unit 20, converted to printable data ("RIPped") in the printing subsystem 2, and printed and reported to the UPS (S112), finalising the process (S114). Otherwise, the process is broken off (S116).

If in check S102 the selected print job was a mixed job, the JobManager 12 asks the UPS for detailed information concerning the colour content, i.c. the page numbers of the colour-designated pages and/or those of the black-and-white-designated pages (S118) and the UPS provides such information (S120). Alternatively, the detailed colour content information may be incorporated in the metadata of the job and therefore already present in the job administration 12a of the printer. The information from the UPS also includes job processing information, such as, if the colour pages have already been printed on a colour printer, the process settings used therefor.

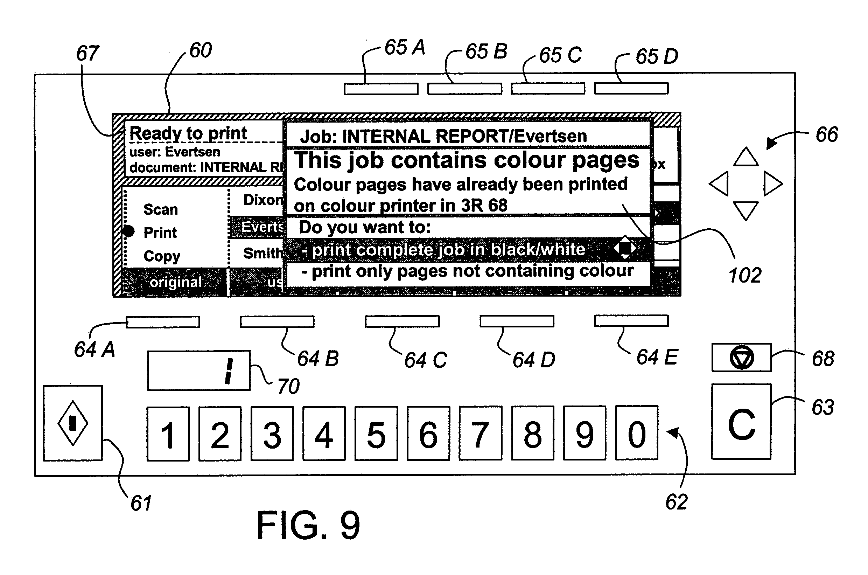

Next, the printer asks the operator, if he wants to have the job completely printed (including both the colour and the black-and-white pages), or have the black-and-white pages printed only (S122). In the latter case, the colour pages may be printed by a colour printer and combined with the black-and-white printed pages. Fig. 9 shows a display screen message for the purpose. A forced dialogue box 102 is superimposed on the screen image showing the job selection.

If the operator opts (S124) for the complete job, the process jumps to step S112, the job is printed and reported to the UPS.

If, on the other hand, the operator opts (124) for printing the black-and-white pages only, the JobManager 12 checks (S126) in the job processing data received from the UPS in step S120, if the colour pages of the job have already been printed on another printer (i.c. a colour printer).

In the case that the colour pages of the print job have already been printed, the forced dialogue of step S122, shown in Fig. 9, says so and its choice is automatically set as default on the of printing the black-and-white pages only.

If it follows (126) from the job processing data that the colour pages of the job have not yet been printed, the printer now fetches the print image data and prints the black-and-white-designated pages of the job (S128), automatically ignoring any finishing settings that would prevent combining the printed pages with the coloured pages yet to be printed (such as stapling) and reports so to the UPS (S130).

If it follows (126) from the job processing data that the colour pages of the job have already been printed, the device checks if the settings used therefor were equal to those presently selected at the current (black-and-white) printer, and if not, informs the operator. The latter may then choose to accept the former settings for the present process (which is set as default), or to stay with the presently selected settings. This is shown in Fig. 7 by the box "align print process settings" (S132).

Further, the device asks the operator via the console display if he wants to have the colour pages inserted automatically during the print process for the black-and-white pages, or wants to insert the colour pages later off-line (S133).

If the operator opts for automatic insertion, the device asks him to put the printed colour pages into a storage tray for insert sheets (S134), and then fetches the print data, RIPs them and prints the black-and-white pages of the job, while inserting the colour pages from the storage tray at the appropriate places in the set (S136). In principle, combination of colour and black-and-white pages is at page level, which means that a print sheet may carry a colour print on one side and a black-and-white print on the other. If the job settings specify finishing operations, such as stapling, the device does so (still in step S136). Finally, the printer reports its actions to the UPS (S130).

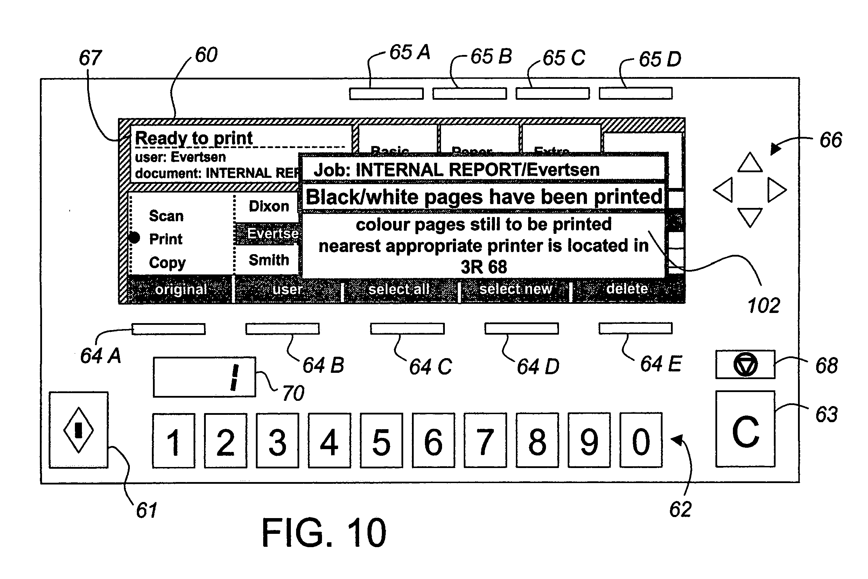

This finalizes the processing at one printer (S138). In the case that only the black-and-white pages were printed (S128), the operator is advised by a message on the display screen of the printer console 160 to print the colour prints of the job at a colour printer, as shown in Fig. 10. This message may also contain extra information for the operator that may help him to complete the job in an easy way, such as the location of the nearest colour printer.

Also in the case that only the black-and-white pages were printed (S128), the operator may now walk to the colour printer 1C to have the colour pages of the same print job printed and complete the print process. This part of the process is described by the flow chart of Fig. 8, which is essentially identical to that of Fig. 7. The printer 1C mentioned there stands for any colour printer in the system. Reference numbers correspond to those of Fig. 7, but carry an accent (S100' corresponds to S100). A detailed description of this flow chart is omitted, since the particulars are considered immediately clear for the skilled person.

As should be clear from the description, that for mixed jobs it is up to the choice of the operator if he starts the print job at the black-and-white printer and finishes at the colour printer, or vice versa.

When a data file has been printed, it remains in principle stored in the storage unit 20 until it is removed by the user himself or the manager of the apparatus. To this end, he gives a command for removal of a selected file. In response to this, the JobManager 12 passes a command to delete the file from the storage unit 20 and it removes the identification data of that file from its administration system 12a. A "time-out" function may be provided to automatically delete a print file after a predetermined time interval.

After having printed the job, the printer sends a report message to the UPS, which instructs all printers to mark the print job as "completely printed" or "partially printed", respectively, in their administration systems and selection lists. Marking a job as "completely printed" is effected by displaying a mark (a "tick sign") next to the file name in the list, while partially printed jobs are shown with a "c" or a "b" on the display for jobs of which only the colour pages, or only the black-and-white pages, respectively, have been printed.

When a print job is deleted by a user at the console of any of the printers, that printer sends a message to that effect to the server function, which deletes the print data of that job from storage and instructs all printers to delete the job metadata from their administration systems.

A "time-out" function may be included within the server function to automatically erase the print data of a print job from storage and to instruct the printers to delete that print job from their administration systems, after a predetermined time interval T1 since the time of arrival of the print file in the system. The time counter may start anew after the first one (or any one) of the colour or black-and-white sub-sets have been printed, for a time interval T2, in order to keep the print file longer available for printing the other sub-set in order to complete the job.

A special form of a print file is an image or series of images generated by scanning documents in a scanner, such as the scanner of any of the digital copiers used as printers in the description above. In a variant of the present invention, also scanned images are included in the list of print files made available for selection and printing on the connected printers. Such scanned files may be identified by the term "copy job" and an identification of the copier on which the scan file was made and the time of scanning. If an accounting is active, then the account name may be used for identification of the scan file. Such scanned print files are expressly included in the present invention.

The invention being thus described, it will be obvious that the same may be varied in many ways. Such variations and modifications as would be obvious to one skilled in the art are intended to be included within the scope of the following claims.

## Claims

1. A method of printing documents including pages having different device-specific properties, such that some of the pages must be printed on a printer of a first type (1 C) and other pages must be printed on a printer of a second, different, type (1A, 1B), in a network system including at least one printer of said first type (1C) and at least one printer of said second type (1A, 1B), the method comprising:
- submitting a print job for printing;
- making the job locally available on the at least one printer of said first type (1 C) as well as on the at least one printer of said second type (1A, 1B), for selection and subsequent print processing, by commands from the relevant printer's local user interface (160);
- locally initiating a print process for a respective print job on an arbitrary one of said printers, irrespective of the type of that printer, through selection of the job and a print command on the local user interface (160) of that printer by an operator,
**characterized by**
in reaction to the receipt of a submitted print job, automatically:
- analysing the data of the print job with respect to device-specific properties of its pages and designating each page, on the basis of the analysis, either for processing on a printer of said first type or for processing on a printer of said second type; and
in reaction to a local initiating of a print job, automatically:
- selecting those pages of the job, that are designated for the type of the said arbitrary one of said printers, for printing on the said arbitrary one of said printers,
- retrieving information regarding any earlier processing of that job by a printer of the other type, said information identifying particular pages that have been printed in the earlier processing, and, when it turns out that that job was already partly printed by another printer,
- advising the operator through the local user interface (160) of the said arbitrary one of said printers to adjust the said arbitrary one of said printers processing to said earlier processing.

2. The method of claim 1, wherein a printer communicates information on its own processing of a print job to other printers in the system and/or to a central system server (5).

3. The method of claim 2, wherein said information includes print job status information.

4. The method of claim 2, wherein said information includes information on process settings used for printing a print job.

5. The method of claim 1, wherein a printer printing its share of a print job presents information on possible other printers for printing the remainder of the job, on its local user interface (160).

6. The method of any of claims 1-5, wherein a printer of said first type (1 C) is a colour printer and a printer of said second type is a black-and-white-only printer (1A, 1 B), and said print job contains both colour and black-and-white pages.

7. The method of claim 6, **characterized by** further comprising:
locally starting a print job on a first printer that is either appropriate for printing the colour-designated or appropriate for black-and-white-designated pages,
loading the pages printed by the first printer into an insert tray of a second printer that is appropriate for printing the pages not yet printed, and
upon locally starting of the job on the second printer, automatically printing said pages not yet printed and inserting the pages printed by the first printer from the insert tray at appropriate places.

8. The method of any of claims 1-5, wherein a printer of said first type is a printer capable of printing on more or other print media sizes than said second type printer, and said print job contains pages of different sizes of which at least one is not supported by one of the printer types, while being supported by the other type printer.

9. The method of any of claims 1-5, wherein a printer of said first type is a printer capable of processing more or other print definition languages (PDLs) than said second type printer, and said print job contains pages encoded in different PDLs of which at least one is not supported by one of the printer types, while being supported by the other type printer.

10. A network system of user workstations, at least one printer of a first type (1C) and at least one printer of a second, different, type (1A, 1 B), for printing documents having pages with different device-specific properties, such that some of the pages must be printed on a printer of said first type and other pages must be printed on a printer of said second type, each of the printers (1 A, 1 B, 1 C) being provided with a local user interface module (160),
the system further comprising a print service (5) adapted to receive print files from a workstation (11A, 11B, 11C) and to make print jobs received from a workstation (11A, 11 B, 11 C) locally available for printing on the at least one printer of said first type (1 C) as well as on the at least one printer of said second type (1A, 1 B), for selection and subsequent print processing, by commands from the relevant printer's local user interface (160),
**characterized in that**
the print service (5) further includes an analysis module for automatically analysing the data of a print job with respect to device-specific properties of its pages and designating each page, on the basis of the analysis, either for processing on a printer of said first type (1 C) or for processing on a printer of said second type (1 A, 1 B), and **in that**
each printer, irrespective of its type, is further provided with modules for, in reaction to a print order on its local user interface (160), said print order including selection of a print job and a start command,
- selecting those pages of the selected job, that are designated for the type of that printer, for printing on the printer,
- retrieving information regarding any earlier processing of that job by a printer of the other type, said information identifying particular pages that have been printed in the earlier processing, and, when it turns out that that job was already partly printed by another printer,
- advising the operator through the local user interface (160) of the printer to adjust the printer's processing to said earlier processing.

11. The system of claim 10, wherein each printer (1A, 1 B, 1 C) is adapted to communicate information on its own processing of a print job to other printers in the system and/or to the print service.

12. The system of claim 11, wherein said information includes print job status information.

13. The system of claim 11, wherein said information includes information on process settings used for printing a print job.

14. The system of any of claims 10-13, wherein a printer of said first type is a colour printer (1 C) and a printer of said second type is a black-and-white-only printer(1A, 1 B).

15. The system of any of claims 10-13, wherein a printer of said first type is a printer capable of printing on more or other print media sizes than said second type printer.

16. The system of any of claims 10-13, wherein a printer of said first type is a printer capable of processing more or other print definition languages (PDLs) than said second type printer.

## Patentansprüche

1. Verfahren zum Drucken von Dokumenten, die Seiten mit verschiedenen gerätespezifischen Eigenschaften enthalten, so dass einige der Seiten auf einem Drucker eines ersten Typs (1C) gedruckt werden müssen und andere Seiten auf einem Drucker eines davon verschiedenen zweiten Typs (1A, 1 B) gedruckt werden müssen, in einem Netzwerksystem, das wenigstens einen Drucker des genannten ersten Typs (1C) und wenigstens einen Drucker des genannten zweiten Typs (1A, 1 B) enthält, welches Verfahren umfasst:
- Einreichen eines Druckauftrags zum Drucken,
- lokales Verfügbarmachen des Auftrags an wenigstens einem Drucker des genannten ersten Typs (1C) sowie an wenigstens einen Drucker des genannten zweiten Typs (1A, 1 B), zur Auswahl und anschließender Druckverarbeitung durch Befehle von der lokalen Benutzerschnittstelle (160) des betreffenden Druckers,
- lokales Initiieren eines Druckprozesses für einen jeweiligen Druckauftrag an einen beliebigen Drucker unter den genannten Druckern, unabhängig vom Typ dieses Druckers, durch Auswahl des Auftrags und einen Druckbefehl an der lokalen Benutzerschnittstelle (160) dieses Druckers durch eine Bedienungsperson, **gekennzeichnet durch**,
als Reaktion auf den Empfang eines eingereichten Druckauftrags, automatisches:
- Analysieren der Daten des Druckauftrags im Hinblick auf gerätespezifische Eigenschaften seiner Seiten und Kennzeichnen jeder Seite, auf der Grundlage der Analyse, entweder für die Verarbeitung auf einem Drucker des genannten ersten Typs oder für die Verarbeitung auf einem Drucker des genannten zweiten Typs, und
als Reaktion auf eine lokale Initiierung eines Druckauftrags, automatisches:
- Auswählen derjenigen Seiten des Auftrags, die für den Typ des genannten beliebigen Druckers **gekennzeichnet** sind, zum Drucken auf diesem genannten beliebigen Drucker,
- Einholen von Information über eine etwaige frühere Verarbeitung dieses Auftrags durch einen Drucker des anderen Typs, wobei diese Information spezielle Seiten identifiziert, die bei der früheren Verarbeitung gedruckt worden sind, und, wenn sich herausstellt, dass der Auftrag bereits zum Teil **durch** einen anderen Drucker gedruckt worden ist,
- Anweisen der Bedienungsperson über die lokale Benutzerschnittstelle (160) des genannten beliebigen Druckers zur Anpassung der Verarbeitung **durch** den genannten beliebigen Drucker an die genannte frühere Verarbeitung.

2. Verfahren nach Anspruch 1, bei dem ein Drucker Information über seine eigene Verarbeitung eines Druckauftrags an andere Drucker in dem System und/oder einen zentralen Systemserver (5) kommuniziert.

3. Verfahren nach Anspruch 2, bei dem die genannte Information Information über den Status des Druckauftrags enthält.

4. Verfahren nach Anspruch 2, bei dem die genannte Information Information über die zum Drucken eines Druckauftrags benutzen Verarbeitungseinstellungen enthält.

5. Verfahren nach Anspruch 1, bei dem ein Drucker, der seinen Anteil an einem Druckauftrag druckt, Information über mögliche andere Drucker zum Drucken des Rests des Auftrags auf seiner lokalen Benutzerschnittstelle (160) ausgibt.

6. Verfahren nach einem der Ansprüche 1 bis 5, bei dem ein Drucker des genannten ersten Typs (1C) ein Farbdrucker ist und ein Drucker des genannten zweiten Typs ein Schwarz/Weiss-Drucker (1A, 1 B) ist und der Druckauftrag sowohl farbige Seiten als auch Seiten in Schwarz/Weiss enthält.

7. Verfahren nach Anspruch 6, **dadurch gekennzeichnet, dass** es weiterhin umfasst:
lokales Starten eines Druckauftrages an einem ersten Drucker, der entweder für das Drucken von als farbig **gekennzeichnet**en Seiten oder für das Drucken von als Schwarz/Weiss **gekennzeichnet**en Seiten geeignet ist,
Einlegen der von dem ersten Drucker gedruckten Seiten in ein Einschubfach eines zweiten Druckers, der zum Drucken der noch nicht gedruckten Seiten geeignet ist, und
beim lokalen Starten des Auftrags auf dem zweiten Drucker, automatisches Drucken der genannten Seiten, die noch nicht gedruckt wurden, und Einfügen der von dem ersten Drucker gedruckten Seiten aus dem Einschubfach an den vorgesehenen Stellen.

8. Verfahren nach einem der Ansprüche 1 bis 5, bei dem ein Drucker des genannten ersten Typs ein Drucker ist, der in der Lage ist, auf mehr oder andere Druckmediengrößen zu drucken als der Drucker des genannten zweiten Typs, und der genannte Druckauftrag Seiten von unterschiedlicher Größe enthält, von denen wenigstens eine nicht durch einen der Druckertypen unterstützt wird, jedoch von dem anderen Druckertyp unterstützt wird.

9. Verfahren nach einem der Ansprüche 1 bis 5, bei dem ein Drucker des genannten ersten Typs ein Drucker ist, der in der Lage ist, mehr oder andere Druckbeschreibungssprachen (PDLs) zu verarbeiten als der Drucker des genannten zweiten Typs, und der genannte Druckauftrag Seiten enthält, die in unterschiedlichen Druckbeschreibungssprachen codiert sind, von denen wenigstens eine nicht von einem der Druckertypen unterstützt wird aber von dem anderen Druckertyp unterstützt wird.

10. Netzwerksystem mit Benutzer-Workstations, wenigstens einem Drucker eines ersten Typs (1C) und wenigstens einem Drucker eines davon verschiedenen zweiten Typs (1A, 1B), zum Drucken von Dokumenten, die Seiten mit unterschiedlichen gerätespezifischen Eigenschaften enthalten, so dass einige der Seiten auf einem Drucker des genannten ersten Typs gedruckt werden müssen und andere Seiten auf einem Drucker des genannten zweiten Typs gedruckt werden müssen, wobei jeder der Drucker (1A, 1 B, 1C) ein lokales Benutzerschnittstellenmodul (160) aufweist,
welches System weiterhin einen Druckerdienst (5) aufweist, der dazu eingerichtet ist, Druckdateien von einer Workstation (11A, 11B, 11C) zu empfangen und von einer Workstation (11A, 11B, 11C) empfangene Druckaufträge an dem wenigstens einen Drucker des genannten ersten Typs (1C) sowie an dem wenigstens einen Drucker des genannten zweiten Typs (1A, 1 B) zum Drucken lokal verfügbar zu machen, zur Auswahl und anschließenden Druckverarbeitung durch Befehle von der lokalen Benutzerschnittstelle (160) des betreffenden Druckers,
**dadurch gekennzeichnet, dass**
der Druckerdienst (5) weiterhin ein Analysemodul enthält, zur automatischen Analyse der Daten eines Druckauftrags im Hinblick auf gerätespezifische Eigenschaften seiner Seiten und zur Kennzeichnung jeder Seite, auf der Grundlage der Analyse, entweder für die Verarbeitung auf einem Drucker des genannten ersten Typs (1C) oder für die Verarbeitung auf einem Drucker des genannten zweiten Typs (1A, 1 B), und dass jeder Drucker, unabhängig von seinem Typ, weiterhin Module aufweist, die als Reaktion auf einen Druckbefehl an seiner lokalen Benutzerschnittstelle (160), wobei dieser Druckbefehl eine Auswahl eines Druckauftrags und einen Startbefehl enthält,
- diejenigen Seiten des ausgewählten Auftrags auswählen, die für den Typ dieses Druckers **gekennzeichnet** sind, zum Drucken auf dem Drucker,
- Information über eine etwaige frühere Verarbeitung dieses Auftrags durch einen Drucker des anderen Typs einholen, wobei diese Information spezielle Seiten identifiziert, die bei der früheren Verarbeitung gedruckt worden sind, und, wenn sich herausstellt, dass der Auftrag bereits zum Teil von einem anderen Drucker gedruckt worden ist,
- die Bedienungsperson anweisen, über die lokale Benutzerschnittstelle (160) des Druckers die Druckverarbeitung an diese frühere Verarbeitung anzupassen.

11. System nach Anspruch 10, bei dem jeder Drucker (1A, 1 B, 1C) dazu eingerichtet ist, Information über seine eigene Verarbeitung eines Druckauftrages an andere Drucker in dem System und/oder an den Druckerdienst zu kommunizieren.

12. System nach Anspruch 11, bei dem die genannte Information Information über den Status des Druckauftrags enthält.

13. System nach Anspruch 11, bei dem die genannte Information Information über Prozesseinstellungen enthält, die zum Drucken eines Druckauftrags benutzt werden.

14. System nach einem der Ansprüche 10 bis 13, bei dem ein Drucker des genannten ersten Typs ein Farbdrucker (1 C) und ein Drucker des genannten zweiten Typs ein Schwarz/Weiss-Drucker (1A, 1 B) ist.

15. System nach einem der Ansprüche 10 bis 13, bei dem ein Drucker des genannten ersten Typs ein Drucker ist, der in der Lage ist, auf mehr oder andere Druckmediengrößen zu drucken als der genannte zweite Druckertyp.

16. System nach einem der Ansprüche 10 bis 13, bei dem ein Drucker des genannten ersten Typs ein Drucker ist, der in der Lage ist, mehr oder andere Druckbeschreibungssprachen (PDLs) zu verarbeiten als der genannte zweite Druckertyp.

## Revendications

1. Procédé d'impression de documents comprenant des pages ayant des propriétés spécifiques au dispositif différentes, telles que certaines des pages doivent êtreimprimées sur une imprimante d'un premier type (1C) et d'autres pages sur une imprimante d'un second type différent (1A, 1B), dans un système en réseau comprenant au moins une imprimante dudit premier type (1C) et au moins une imprimante dudit second type (1A, 1 B), le procédé comprenant les étapes consistant à :
- soumettre un travail d'impression en vue de son impression ;
- rendre le travail localement disponible sur l'au moins une imprimante dudit premier type (1C) ainsi que sur l'au moins une imprimante dudit second type (1A, 1B), en vue de sa sélection puis son traitement d'impression, par des commandes provenant de l'interface utilisateur local (160) de l'imprimante pertinente ;
- lancer localement un traitement d'impression d'un travail d'impression respectif sur une imprimante arbitraire desdites imprimantes, quel que soit le type de cette imprimante, par sélection du travail et une commande d'impression sur l'interface utilisateur local (160) de cette imprimante par un opérateur,
**caractérisé par** les étapes consistant à,
en réponse à la réception d'un travail d'impression soumis, automatiquement :
- analyser les données du travail d'impression relativement aux propriétés spécifiques au dispositif de ses pages et désigner chaque page, en fonction de l'analyse, en vue de son traitement sur une imprimante dudit premier type ou de son traitement sur une imprimante dudit second type ; et,
en réponse à un lancement local d'un travail d'impression, automatiquement :
- sélectionner les pages du travail qui sont désignées pour le type de ladite imprimante arbitraire desdites imprimantes, en vue de leur impression sur ladite imprimante arbitraire desdites imprimantes,
- récupérer des informations concernant tout traitement antérieur de ce travail par une imprimante de l'autre type, lesdites informations identifiant des pages particulières qui ont été imprimées dans le traitement antérieur et, lorsqu'il s'avère que ce travail a déjà été en partie imprimé par une autre imprimante,
- aviser l'opérateur, via l'interface utilisateur local (160) de ladite imprimante arbitraire desdites imprimantes, de régler le traitement de ladite imprimante arbitraire desdites imprimantes sur ledit traitement antérieur.

2. Procédé selon la revendication 1, dans lequel une imprimante communique des informations sur son propre traitement d'un travail d'impression à d'autres imprimantes du système et/ou à un serveur de système central (5).

3. Procédé selon la revendication 2, dans lequel lesdites informations comprennent des informations de statut du travail d'impression.

4. Procédé selon la revendication 2, dans lequel lesdites informations comprennent des informations sur les réglages de processus utilisés pour l'impression d'un travail d'impression.

5. Procédé selon la revendication 1, dans lequel une imprimante imprimant sa part d'un travail d'impression présente des informations relatives à d'autres imprimantes possibles en vue de l'impression du restant du travail sur son interface utilisateur local (160).

6. Procédé selon l'une quelconque des revendications 1 à 5, dans lequel une imprimante dudit premier type (1C) est une imprimante couleurs et une imprimante dudit second type est une imprimante en noir et blanc uniquement (1A, 1 B), et ledit travail d'impression contient à la fois des pages en couleurs et des pages en noir et blanc.

7. Procédé selon la revendication 6, **caractérisé en outre en ce qu'**il comprend les étapes consistant à :
lancer localement un travail d'impression sur une première imprimante qui convient à l'impression de pages désignées en couleurs ou qui convient à l'impression de pages désignées en noir et blanc,
charger les pages imprimées par la première imprimante dans un plateau d'insertion d'une seconde imprimante qui convient à l'impression des pages qui ne sont pas encore imprimées, et,
lors du lancement local du travail sur la seconde imprimante, imprimer automatiquement lesdites pages non encore imprimées et insérer les pages imprimées par la première imprimante depuis le plateau d'insertion dans des emplacements appropriés.

8. Procédé selon l'une quelconque des revendications 1 à 5, dans lequel une imprimante dudit premier type est une imprimante capable d'imprimer sur un plus grand nombre de tailles de supports d'impression et sur d'autres tailles de supports d'impression que le peut ladite imprimante du second type, et ledit travail d'impression contient des pages de différentes tailles dont au moins l'une n'est pas supportée par l'un des types d'imprimantes, mais est supportée par l'imprimante de l'autre type.

9. Procédé selon l'une quelconque des revendications 1 à 5, dans lequel une imprimante dudit premier type est une imprimante capable de traiter un plus grand nombre de langues de définition d'impression (PDL) ou d'autres PDL que le peut l'imprimante du second type, et ledit travail d'impression contient des pages codées dans différentes PDL dont au moins l'une n'est pas supportée par l'un des types d'imprimantes, mais est supportée par l'imprimante de l'autre type.

10. Système en réseau de postes de travail utilisateurs, d'au moins une imprimante d'un premier type (1C) et d'au moins une imprimante d'un second type différent (1A, 1 B), pour imprimer des documents ayant des pages à propriétés spécifiques au dispositif différentes, telles que certaines des pages doivent être imprimées sur une imprimante dudit premier type et d'autres pages sur une imprimante dudit second type, chacune des imprimantes (1A, 1B, 1C) étant munie d'un module d'interface utilisateur local (160),
le système comprenant en outre un service d'impression (5) adapté pour recevoir des fichiers d'impression d'un poste de travail (11A, 11 B, 11 C) et effectuer des travaux d'impression reçus d'un poste de travail (11A, 11B, 11C) disponibles localement en vue de leur impression sur l'au moins une imprimante dudit premier type (1C) ainsi que sur l'au moins une imprimante dudit second type (1A, 1 B), en vue de leur sélection puis leur traitement d'impression par des commandes de l'interface utilisateur local des imprimantes pertinentes (160),
**caractérisé en ce que** :
le service d'impression (5) comprend en outre un module d'analyse pour analyser automatiquement les données d'un travail d'impression relativement aux propriétés spécifiques au dispositif différentes de ses pages et désigner chaque page, en fonction de l'analyse, en vue de son traitement sur une imprimante dudit premier type (1C) ou de son traitement sur une imprimante dudit second type (1A, 1 B), et **en ce que** :
chaque imprimante, quel que soit son type, est en outre munie de modules pour, en réponse à un ordre d'impression sur son interface utilisateur local (160), ledit ordre d'impression comprenant la sélection d'un travail d'impression et une commande de lancement,
- sélectionner les pages du travail sélectionné qui sont désignées pour le type de cette imprimante, en vue de leur impression sur l'imprimante,
- récupérer des informations concernant tout traitement antérieur de ce travail par une imprimante de l'autre type, lesdites informations identifiant des pages particulières qui ont été imprimées au cours du traitement antérieur et, lorsqu'il s'avère que ce travail a déjà été en partie imprimé par une autre imprimante,
- aviser l'opérateur via l'interface utilisateur local (160) de l'imprimante de régler le traitement de l'imprimante sur ledit traitement antérieur.

11. Système selon la revendication 10, dans lequel chaque imprimante (1A, 1 B, 1C) est adaptée pour communiquer des informations sur son propre traitement d'un travail d'impression à d'autres imprimantes du système et/ou au service d'impression.

12. Système selon la revendication 11, dans lequel lesdites informations comprennent des informations de statut de travail d'impression.

13. Système selon la revendication 11, dans lequel lesdites informations comprennent des informations sur les réglages de processus utilisés pour imprimer un travail d'impression.

14. Système selon l'une quelconque des revendications 10 à 13, dans lequel une imprimante dudit premier type est une imprimante couleurs (1C) et une imprimante dudit second type est une imprimante en noir et blanc uniquement (1A, 1 B).

15. Système selon l'une quelconque des revendications 10 à 13, dans lequel une imprimante dudit premier type est une imprimante capable d'imprimer sur un plus grand nombre de supports d'impression ou sur d'autres supports d'impression que le peut ladite imprimante du second type.

16. Système selon l'une quelconque des revendications 10 à 13, dans lequel une imprimante dudit premier type est une imprimante capable de traiter un plus grand nombre de langues de définition d'impression (PDL) ou d'autres PDL que le peut ladite imprimante du second type.
